# EUROPEAN PATENT APPLICATION

(11) **EP 3 509 049 A1**
(43) Date of publication of application: **10.07.2019**
(21) Application number: 17865372.1
(22) Date of filing: 27.10.2017
(51) Int. Cl.: G08G 1/07, G08G 1/00

(54) **INACCESSIBLE ROAD SECTION ESTIMATION SYSTEM AND INACCESSIBLE ROAD SECTION ESTIMATION PROGRAM**

(30) Priority: 31.10.2016 JP 2016212936
(71) Applicant: Aisin Aw Co., Ltd., Anjo-shi, Aichi 444-1192 (JP)
(72) Inventor: NAKAMURA, Norihiro, Anjo-shi Aichi 444-1192 (JP)
(74) Representative: Cabinet Beau de Loménie
(86) International application number: PCT/JP2017/038830
(87) International publication number: WO 2018/079694

(57) **Abstract**

There is provided a technique that can reduce the possibility of misjudging that a road section is inaccessible to vehicles. An inaccessible road section estimation system includes a regional road section extracting part that extracts regional road sections, each of the regional road sections being a road section in a target region, the target region being an area where a factor causing a road section to become inaccessible has occurred; and an inaccessible road section estimating part that estimates, as an inaccessible road section, a road section around which a mobile unit has detoured after occurrence of the factor, among the regional road sections.

## Description

### TECHNICAL FIELD

The present invention relates to an inaccessible road section estimation system and an inaccessible road section estimation program.

### BACKGROUND ART

There is known a technique in which when an abnormality has occurred in traffic equipment or a vehicle sensor installed in a road section and there is no probe information transmitted from probe cars passing through the road section, it is determined that the road section is inaccessible to vehicles (see Patent Literature 1).

### CITATIONS LIST

### PATENT LITERATURE

Patent Literature 1: JP 2013-97550 A

### SUMMARY OF INVENTION

### TECHNICAL PROBLEMS

The case in which there is no probe information includes not only a case in which a road is inaccessible in reality, but also a case in which there has not been even a single vehicle intending to pass through the road in the first place. Hence, in Patent Literature 1, there is a problem that when there is no probe information, despite the fact that there has not been just even a single vehicle intending to pass through the road in the first place, it is misjudged that the road section is inaccessible to vehicles.

The present invention is made in view of the above-described problem, and provides a technique capable of reducing the possibility of misjudging that a road section is inaccessible to vehicles.

### SOLUTIONS TO PROBLEMS

To provide the above-described technique, an inaccessible road section estimation system of the present invention includes: a regional road section extracting part that extracts regional road sections, each of the regional road sections being a road section in a target region, the target region being an area where a factor causing a road section to become inaccessible has occurred; and an inaccessible road section estimating part that estimates, as an inaccessible road section, a road section around which a mobile unit has detoured after occurrence of the factor, among the regional road sections.

To provide the above-described technique, an inaccessible road section estimation program of the present invention causes a computer to function as: a first road section extracting part that extracts regional road sections, each of the regional road sections being a road section in a target region, the target region being an area where a factor causing a road section to become inaccessible has occurred; and an inaccessible road section estimating part that estimates, as an inaccessible road section, a road section around which a mobile unit has detoured after occurrence of the factor, among the regional road sections.

In the above-described configuration, by estimating, as an inaccessible road section, a road section around which a user of a mobile unit has intentionally detoured, the possibility of misjudging that a road section is inaccessible to mobile units can be reduced. Namely, the possibility can be reduced that a road section of a road through which there has not been merely even a single mobile unit intending to pass in the first place is erroneously estimated as an inaccessible road section.

### BRIEF DESCRIPTION OF DRAWINGS

FIG. 1 is a block diagram of an inaccessible road section estimation system.
FIG. 2 is an example of a map.
FIG. 3 is a flowchart of an inaccessible road section estimation process.
FIG. 4 is a flowchart of an inaccessible road section estimation process according to a second embodiment.
FIG. 5 is a schematic diagram of a road in a third embodiment.

### DESCRIPTION OF EMBODIMENTS

Here, embodiments of the present invention will be described in the following order:
(1) Configuration of an inaccessible road section estimation system;
(2) Inaccessible road section estimation process;
(3) Second embodiment;
(4) Third embodiment; and
(5) Other embodiments.

### (1) Configuration of an inaccessible road section estimation system

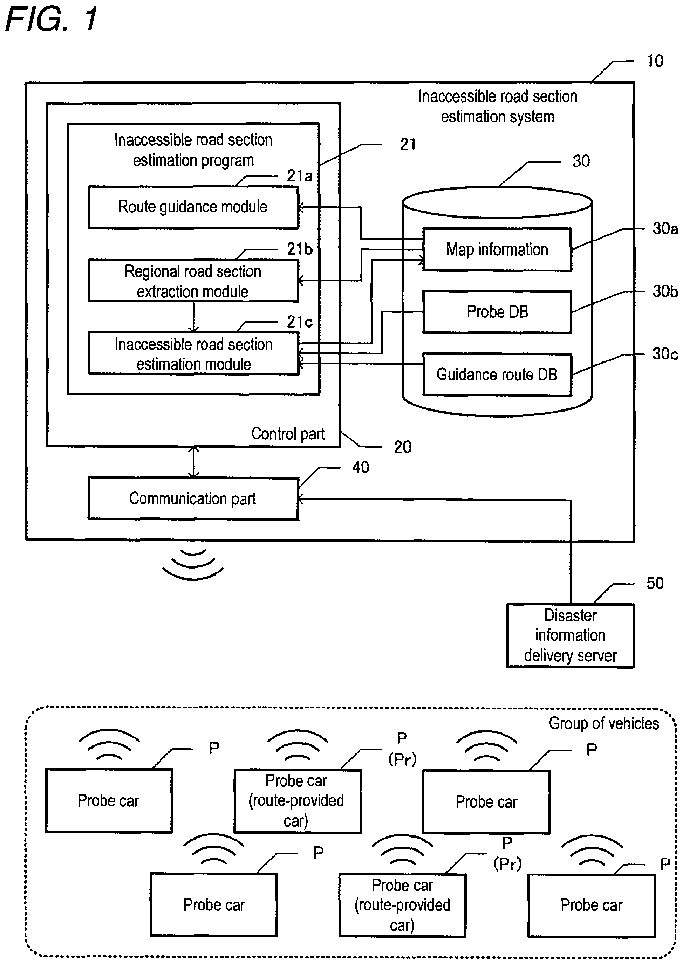

FIG. 1 is a block diagram showing a configuration of an inaccessible road section estimation system 10 according to one embodiment of the present invention. The inaccessible road section estimation system 10 is a server configured to be able to communicate with a group of vehicles and a disaster information delivery server 50. A mobile unit of the present embodiment is a vehicle. The inaccessible road section estimation system 10 includes a control part 20, a recording medium 30, and a communication part 40. The control part 20 includes a CPU, a RAM, a ROM, etc., and executes an inaccessible road section estimation program 21 stored in the recording medium 30 or the ROM.

The recording medium 30 records therein map information 30a, probe DB (database) 30b, and a guidance route DB (database) 30c. The map information 30a includes node data, link data, and region information. Each piece of node data mainly represents information about a node corresponding to an intersection. Specifically, the node data represents the coordinates of a node and the shape of an intersection. Each piece of link data represents, for a link corresponding to a road section, various types of information such as the number of lanes, width, and a search cost. The road section is a unit of a road segmented by intersections present continuously in a length direction, and nodes are present at both ends of a link. Note that a node having three or more links connected thereto corresponds to an intersection. The link data includes shape interpolation point data. Each piece of shape interpolation point data is data representing the coordinates of a shape interpolation point set in the center in a width direction of a road section. The control part 20 obtains the coordinates of nodes and the coordinates of shape interpolation points, and obtains a polyline that connects those coordinates or an approximate curve of those coordinates, as the shape of a road section. The search cost is an index value that is used to search for a guidance route and that indicates how difficult it is to be adopted as a road section on a guidance route. Each piece of region information is information identifying the boundary of an administrative district (a prefecture, a city, a town, a village, etc.).

The probe DB 30b is a database in which pieces of probe information transmitted from probe cars P are accumulated. Each probe car P includes a computer, such as a car navigation apparatus, and location identifying means which are not shown. The computer generates probe information every time the vehicle leaves a road section, and transmits the probe information to the inaccessible road section estimation system 10. The probe information includes information identifying each individual probe car P; information identifying a road section where passage is completed; and information indicating a passage time of the road section (e.g., a leaving time). The location identifying means may include, for example, a GPS receiving part, a vehicle speed sensor, or a gyro sensor.

The guidance route DB 30c is a database in which pieces of route information indicating guidance routes provided to route-provided cars Pr are accumulated. The route-provided cars Pr are some vehicles among the probe cars P. All probe cars P provide probe information to the inaccessible road section estimation system 10, but of those probe cars P, only some vehicles (route-provided cars Pr) are provided with guidance routes from the inaccessible road section estimation system 10.

The inaccessible road section estimation system 10 delivers guidance routes to the route-provided cars Pr and accumulates the guidance routes in the guidance route DB 30c. Each guidance route is a route in which a point of departure is connected to a destination by a series of road sections. A route-provided car Pr to which a guidance route is delivered from the inaccessible road section estimation system 10 provides guidance for guiding the vehicle on the guidance route. For example, a diagram showing the guidance route is displayed on a map, or guidance on a vehicle's traveling direction (straight ahead, a left or right turn, etc.) is provided at an intersection so that the vehicle can leave for the next road section on the guidance route at the intersection.

The communication part 40 is a communication circuit for implementing communication between the inaccessible road section estimation system 10 and each probe car P and communication between the inaccessible road section estimation system 10 and the disaster information delivery server 50. The communication part 40 communicates with the probe cars P through a mobile phone communication network, and communicates with the disaster information delivery server 50 through the Internet. Of course, the communication methods for the communication part 40 are not limited thereto.

The inaccessible road section estimation program 21 includes a route guidance module 21a, a regional road section extraction module 21b, and an inaccessible road section estimation module 21c. The regional road section extraction module 21b and the inaccessible road section estimation module 21c are program modules that cause the control part 20 serving as a computer to function as a regional road section extracting part and an inaccessible road section estimating part, respectively.

The route guidance module 21a is a program module that allows the control part 20 to implement a function of searching for a guidance route and accumulating the guidance route in the guidance route DB 30c. Namely, by the function of the route guidance module 21a, when the control part 20 receives a route search request from a route-provided car Pr, the control part 20 searches for a guidance route in response to the route search request. The route search request includes the point of departure and destination of the route-provided car Pr. In the present embodiment, the point of departure is a current location of the route-provided car Pr, and when the current location deviates from an existing guidance route, a route search request with the deviated current location being a point of departure is made again.

The control part 20 searches for a guidance route which is a series of road sections connecting a point of departure to a destination, by the publicly known Dijkstra's algorithm, etc. The control part 20 searches for an optimal guidance route such that the total value of search costs for road sections forming a guidance route is minimized. The search cost is an index value associated with each road section. For example, the search cost increases as the section length of the road section increases, and increases as the travel time for the road section increases. Therefore, the control part 20 searches for a guidance route such that the total value of section lengths and travel time is as small as possible. When a road section is estimated to be an inaccessible road section, the search cost for the road section is revised upward.

In addition, the control part 20 delivers route information indicating a series of road sections forming a guidance route to a route-provided car Pr. By this, the route-provided car Pr can display the guidance route on a map, and can guide the vehicle on the guidance route. Furthermore, the control part 20 delivers guidance information for guiding the vehicle on the guidance route, to the route-provided car Pr. For example, information for providing a user with guidance on a vehicle's traveling direction (straight ahead, a left or right turn, etc.) at an intersection so that the vehicle can leave for a road section on the guidance route at the intersection is delivered as guidance information to the route-provided car Pr. The control part 20 delivers route information to the route-provided car Pr, and accumulates the route information in the guidance route DB 30c such that the route information is associated with identification information of the route-provided car Pr. Here, the user is an occupant of the route-provided car Pr.

Furthermore, the control part 20 determines whether the route-provided car Pr to which the route information is delivered has arrived at a destination of the guidance route. For example, the control part 20 receives information indicating a current location of the route-provided car Pr to which the route information is delivered, every predetermined time period (e.g., one minute) from the route-provided car Pr, and when the current location is within a predetermined determination distance (e.g., 50 m) from the destination, the control part 20 determines that the route-provided car Pr has arrived at the destination of the guidance route. Note that when the time of arrival at the destination is delayed by a reference period or more from a delivery time of the route information or a scheduled arrival time at the destination (e.g., when delayed by five hours or more), the control part 20 may not determine that the route-provided car Pr has arrived at the destination.

Here, when the current location of the route-provided car Pr deviates from an existing guidance route, a route search request with the current location obtained upon the deviation being a point of departure is made again, and route information of a revised guidance route which is a guidance route obtained in response to the route search request is delivered to the route-provided car Pr again. That is, every time the current location of the route-provided car Pr deviates from a guidance route, route information indicating the first guidance route and one or more revised guidance routes that have a common destination is accumulated in the guidance route DB 30c. In such a case, when the route-provided car Pr arrives at a destination of a guidance route, the control part 20 attaches an arrival flag to each of pieces of route information indicating the first guidance route and one or more revised guidance routes that have a common destination. In addition, the arrival flags are associated with an arrival time.

The regional road section extraction module 21b is a program module that allows the control part 20 to implement a function of extracting regional road sections which are road sections in a target region which is an area where a factor causing a road section to become inaccessible has occurred. By the function of the regional road section extraction module 21b, the control part 20 obtains a target region where a disaster which is a factor causing a road section to become inaccessible has occurred and a time of occurrence of the disaster, from disaster information received from the disaster information delivery server 50. The disaster information indicates an administrative district where the disaster has occurred, and the control part 20 obtains the administrative district as a target region. In the present embodiment, the factor causing a road section to become inaccessible is a disaster and includes, for example, an earthquake, water damage, a typhoon, heavy snow, and a large-scale fire.

By the function of the regional road section extraction module 21b, the control part 20 extracts regional road sections which are road sections present in the target region, from the link data in the map information 30a. The control part 20 extracts all road sections, at least a part of which (a node at one end) is included in the target region, as regional road sections.

The inaccessible road section estimation module 21c is a program module that allows the control part 20 to implement a function of estimating, as an inaccessible road section, a road section around which a mobile unit has detoured after the occurrence of a factor, among the regional road sections. Specifically, by the function of the inaccessible road section estimation module 21c, the control part 20 estimates, as an inaccessible road section, a road section through which a mobile unit has not passed even once and around which the mobile unit has detoured during a period from the occurrence of a factor until now, among the regional road sections. The control part 20 extracts road sections with no vehicles passing through which are road sections, among the regional road sections, where even a single piece of probe information indicating that a corresponding one of the regional road sections is passed through has not been collected during a period from the occurrence of a factor until now, and extracts an inaccessible road section around which the mobile unit has detoured during the period from the occurrence of the factor until now, among the road sections with no vehicles passing through.

First, by the function of the inaccessible road section estimation module 21c, the control part 20 extracts, from the probe DB 30b, pieces of probe information having passage times with which times within a period from the time of occurrence of a disaster until the current time are associated. Then, the control part 20 excludes road sections associated with the extracted pieces of probe information (road sections through which a mobile unit has passed) from the regional road sections, and extracts road sections having remained until the end, as road sections with no vehicles passing through.

Thereafter, by the function of the inaccessible road section estimation module 21c, the control part 20 extracts an inaccessible road section around which the mobile unit has detoured during the period from the occurrence of the factor until now, among the road sections with no vehicles passing through. Here, the road section around which the mobile unit has detoured is a road section to which a user is guided as a road section on a route that guides the mobile unit to a destination, but the mobile unit has arrived at the destination without passing through the road section. By the function of the inaccessible road section estimation module 21c, the control part 20 extracts, from the guidance route DB 30c, route information to which an arrival flag is attached and which has an arrival time with which a time within the period from the time of occurrence of the disaster until the current time is associated. Then, the control part 20 estimates, as an inaccessible road section, a road section which is a road section forming a guidance route (including a revised guidance route) indicated by the extracted route information among the road sections with no vehicles passing through. As described above, a road section with no vehicles passing through is a road section through which a probe car P has not passed even once, and thus, a road section with no vehicles passing through that forms a guidance route corresponds to a road section to which a user is guided but has not passed therethrough.

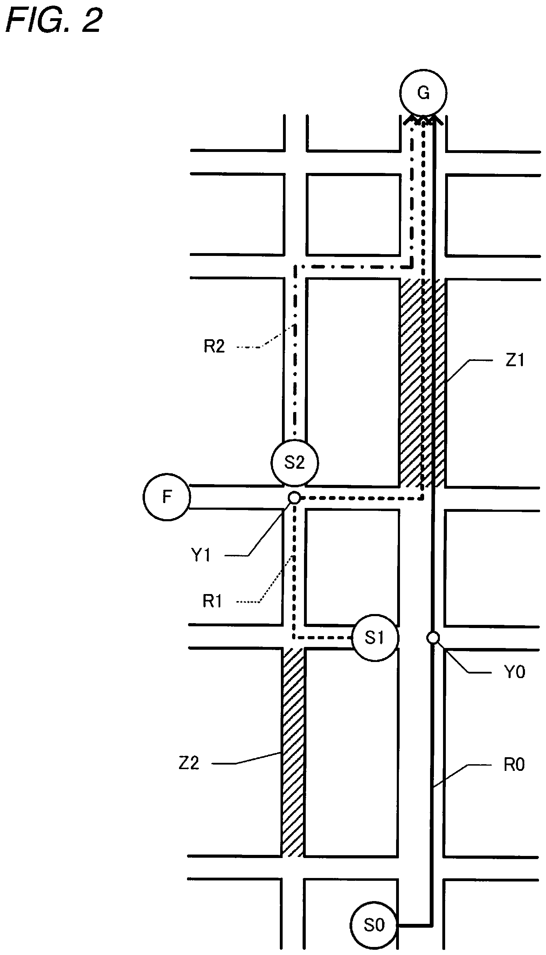

FIG. 2 is a map showing an example of guidance routes R. It is assumed that all road sections shown in the drawing are present in a target region. In the drawing, it is assumed that a user which is an occupant of a route-provided car Pr is guided to a guidance route R0 (solid line) from a point of departure S0 to a destination G. It is assumed, however, that the route-provided car Pr deviates from the guidance route R0 at a point Y0 on the guidance route R0, and the user is guided to a revised guidance route R1 (dashed line) to the destination G with a point near the point Y0 being a new point of departure S1. Furthermore, it is assumed that the route-provided car Pr deviates from the revised guidance route R1 at a point Y1 on the revised guidance route R1, the user is guided to a revised guidance route R2 (dash-dotted line) to the destination G with a point near the point Y1 being a new point of departure S2, and the route-provided car Pr passes through the revised guidance route R2 and arrives at the destination G. In this case, by the route-provided car Pr passing through the revised guidance route R2 and arriving at the destination G, an arrival flag is attached to the guidance route R0 and each of the revised guidance routes R1 and R2. In addition, road sections with no vehicles passing through Z1 and Z2 are hatched.

In the example of FIG. 2, the road section with no vehicles passing through Z2 is not included in any of the guidance route R0 and the revised guidance routes R1 and R2, and thus, does not serve as a road section to which the user is guided but has detoured therearound. Hence, even if the vehicle has not passed through the road section with no vehicles passing through Z2 even once, the road section with no vehicles passing through Z2 is not estimated to be an inaccessible road section. Since the route-provided car Pr is also a probe car P, pieces of probe information are transmitted with which road sections through which the route-provided car Pr has actually passed among the road sections of the guidance route R0 and the revised guidance routes R1 and R2 are associated.

Here, the road section with no vehicles passing through Z1 is not included in the revised guidance route R2, but is included in the guidance route R0 and the revised guidance route R1, and thus, is a road section to which the user is guided but has detoured therearound. Hence, the road section with no vehicles passing through Z1 is estimated to be an inaccessible road section.

When the inaccessible road section is estimated, by the function of the inaccessible road section estimation module 21c, the control part 20 revises upward a search cost for the inaccessible road section to a very larger value than that obtained before estimating it as the inaccessible road section. As a result, the inaccessible road section is less likely to be adopted as a road section forming a guidance route.

In the present embodiment described above, the control part 20 estimates, as an inaccessible road section, a road section through which a vehicle has not passed even once and around which the vehicle has detoured. By estimating, as an inaccessible road section, a road section through which not only the vehicle has not simply passed even once, but also has intentionally detoured therearound, the possibility of misjudging that a road section is inaccessible to vehicles can be reduced. Namely, the possibility can be reduced that a road section of a road through which there has not been merely even a single vehicle intending to pass in the first place (e.g., the road section with no vehicles passing through Z2 of FIG. 2) is erroneously estimated as an inaccessible road section.

In addition, in the present embodiment, the road section around which the vehicle has detoured is a road section to which the user is guided as a road section on the guidance routes R0 and R1 guiding the vehicle to the destination G, but the vehicle has arrived at the destination G without passing through the road section. A road section through which the vehicle has not actually passed despite the fact that the user is guided thereto once can be estimated to be a road section around which the user has intentionally detoured due to, for example, the user having visually identified the occurrence of an event such as a landslide ahead of him/her, and can be estimated to be a road section (e.g., the road section with no vehicles passing through Z1 of FIG. 2) around which the user has detoured as a result of him/her determining that the road section is inaccessible.

In addition, by narrowing down first a road section corresponding to an inaccessible road section, a process of extracting an inaccessible road section can be efficiently implemented. Particularly, by extracting the road sections with no vehicles passing through Z1 and Z2 where even a single piece of probe information has not been collected, before extracting a road section around which the vehicle has detoured, the number of road sections serving as processing targets for determining whether the vehicle has detoured can be significantly narrowed down, enabling to efficiently perform the process. Furthermore, by allowing a disaster to serve as a factor causing a road section to become inaccessible, a road section having become inaccessible due to a disaster can be estimated.

### (2) Inaccessible road section estimation process

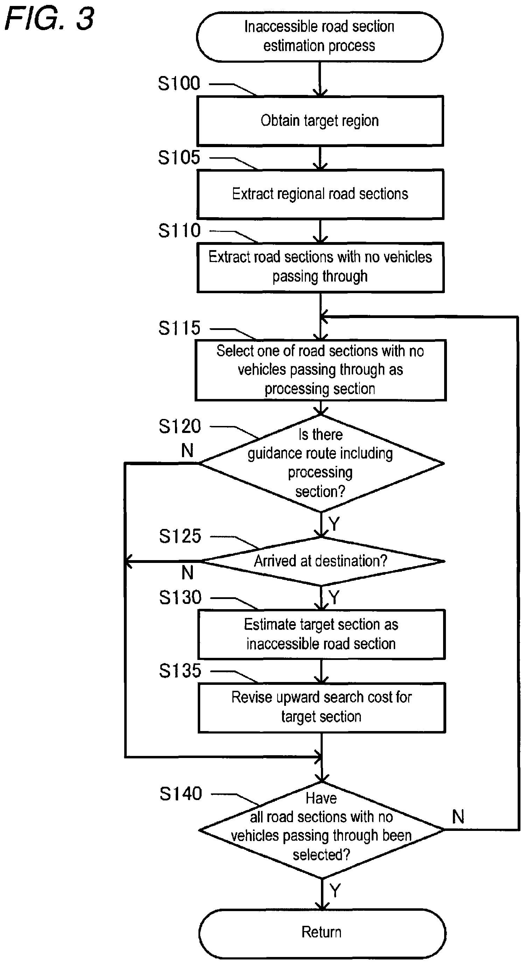

Next, an inaccessible road section estimation process performed by the functions of the inaccessible road section estimation program 21 will be described using the map of FIG. 2 as an example. FIG. 3 is a flowchart of the inaccessible road section estimation process. The inaccessible road section estimation process is a process performed every predetermined time period. First, by the function of the regional road section extraction module 21b, the control part 20 obtains a target region (step S100). Namely, the control part 20 obtains a target region indicated by disaster information received so far that it is a region where a disaster has occurred.

Then, by the function of the regional road section extraction module 21b, the control part 20 extracts regional road sections (step S105). Namely, the control part 20 extracts regional road sections which are road sections, at least a part of which is present in the target region, from the link data in the map information 30a.

Then, by the function of the inaccessible road section estimation module 21c, the control part 20 extracts road sections with no vehicles passing through (step S110). Namely, the control part 20 extracts road sections with no vehicles passing through Z1 and Z2 which are road sections, among the regional road sections, where even a single piece of probe information indicating that a corresponding one of the regional road sections is passed through has not been collected during a period from the occurrence of the factor until now. Specifically, the control part 20 excludes road sections indicated by probe information having passage times with which times within a period from the time of occurrence of the disaster until the current time are associated, from the regional road sections and extracts road sections having remained until the end, as the road sections with no vehicles passing through Z1 and Z2.

Then, by the function of the inaccessible road section estimation module 21c, the control part 20 selects either one of the road sections with no vehicles passing through Z1 and Z2, as a processing section (step S115). Here, description is made below assuming that the road section with no vehicles passing through Z1 of FIG. 2 has been selected.

Then, by the function of the inaccessible road section estimation module 21c, the control part 20 determines whether there is a guidance route including the processing section (step S120). As shown in FIG. 2, as a guidance route including the road section with no vehicles passing through Z1, there are a guidance route R0 and a revised guidance route R1 in the guidance route DB 30c.

If it is determined that there is a guidance route including the processing section (step S120: Y), by the function of the inaccessible road section estimation module 21c, the control part 20 determines whether the vehicle has arrived at a destination G (step S125). Namely, the control part 20 determines, for at least one of the guidance route R0 and the revised guidance route R1 that include the processing section, whether an arrival flag is attached and the arrival time is within the period from the time of occurrence of the disaster until the current time. Since, by the arrival of the route-provided car Pr at the destination G by passing through a revised guidance route R2, an arrival flag is also attached to the guidance route R0 and the revised guidance route R1, it is determined that the route-provided car Pr has arrived at the destination G of the guidance route R0 and the revised guidance route R1 that include the road section with no vehicles passing through Z1.

If it is determined that the vehicle has arrived at the destination G (step S125: Y), by the function of the inaccessible road section estimation module 21c, the control part 20 estimates a target section as an inaccessible road section (step S130). By this, the road section with no vehicles passing through Z1 is estimated as an inaccessible road section.

Then, by the function of the inaccessible road section estimation module 21c, the control part 20 revises upward a search cost for the inaccessible road section (step S135). By this, the road section with no vehicles passing through Z1 can be made less likely to be adopted as a road section forming a guidance route. Namely, the possibility that the user is to be guided to a road section having become inaccessible due to a disaster can be reduced. Note that the control part 20 may securely prevent the road section with no vehicles passing through Z1 from being adopted as a road section on a guidance route by deleting the road section with no vehicles passing through Z1 from the map information 30a.

Then, by the function of the inaccessible road section estimation module 21c, the control part 20 determines whether all road sections with no vehicles passing through have been selected (step S140). Namely, the control part 20 determines whether all road sections with no vehicles passing through Z1 and Z2 extracted at step S105 have been selected as a target section.

If it is not determined that all road sections with no vehicles passing through have been selected (step S140: N), by the function of the inaccessible road section estimation module 21c, the control part 20 returns to step S115. Namely, the processes at step S120 to S140 are performed with the remaining road section with no vehicles passing through Z2 being a processing section. For the road section with no vehicles passing through Z2 of FIG. 2, it is not determined that there is a guidance route including the processing section (step S120: N). In this case, the control part 20 proceeds to step S140 and then ends the inaccessible road section estimation process. Then, the control part 20 waits until a time period has elapsed next.

Note that when it is not determined that the vehicle has arrived at a destination G, too (step S125: N), the control part 20 proceeds to step S140. Namely, when, although there is a guidance route including the processing section, there is no route-provided car Pr having arrived at the destination G of the guidance route, the control part 20 does not estimate the processing section as a road section with no vehicles passing through. When the vehicle has not arrived at the destination G, it can be estimated that a user's intention to go to the destination G is lost, and it cannot be estimated that the vehicle has detoured around the processing section. For example, in FIG. 2, when a route-provided car Pr to which the guidance route R0 is delivered has been parked at a point F without passing through the road section with no vehicles passing through Z1, a user's intention to go to the destination G is lost and it cannot be estimated that the route-provided car Pr has detoured around the road section with no vehicles passing through Z1.

### (3) Second embodiment

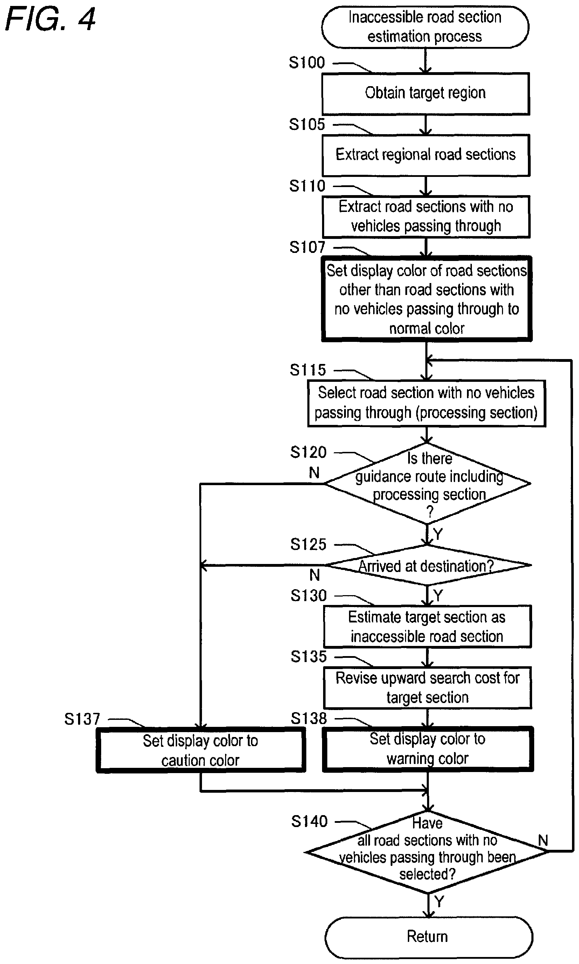

FIG. 4 is a flowchart of an inaccessible road section estimation process according to a second embodiment. In the present embodiment, by the function of the inaccessible road section estimation module 21c, when the control part 20 displays road sections on a map, the control part 20 allows road sections with no vehicles passing through and an inaccessible road section to be identifiable.

A point specific to the inaccessible road section estimation process according to the present embodiment (FIG. 4) over the inaccessible road section estimation process (FIG. 3) of the first embodiment is that step S107, S137, and S138 indicated by thick frames are added. By the function of the inaccessible road section estimation module 21c, the control part 20 sets the display color of road sections other than road sections with no vehicles passing through to a normal color (e.g., blue) (step S107). Here, the road sections other than road sections with no vehicles passing through include road sections outside a target region, and road sections that are present in the target region but have a probe car P having passed therethrough. Those road sections are less likely to be inaccessible and thus are set with a normal color that does not call user's attention.

In addition, by the function of the inaccessible road section estimation module 21c, the control part 20 sets the display color of a target section that is a road section with no vehicles passing through but has not been estimated to be an inaccessible road section, to a caution color (e.g., yellow) (step S137). A road section through which the probe car P has not passed has the likelihood of being inaccessible and thus is set with a caution color that calls user's attention.

Furthermore, by the function of the inaccessible road section estimation module 21c, the control part 20 sets the display color of a target section estimated to be an inaccessible road section to a warning color (e.g., red) (step S137). The road section estimated to be an inaccessible road section is highly likely to be inaccessible and thus is set with a warning color that calls more user's attention than the caution color.

As described above, the set display colors are associated with link data in the map information 30a. The control part 20 delivers the map information 30a to a route-provided car Pr. By this, when an in-vehicle display apparatus included in the probe car P displays a map, the in-vehicle display apparatus displays each road section in a corresponding one of the display colors set at step S107, S137, and S138. By doing so, road sections can be displayed such that the likelihood of being inaccessible is identifiable. Note that the map information 30a in which the display colors of road sections are set may be uploaded to a map server on the Internet, and a map showing road sections in the display colors indicated by the map information 30a may be displayed on a terminal on the Internet. Note that in the present embodiment the configuration may be any as long as the display colors of road sections can be set, and upward revision of a search cost for an inaccessible road section (step S135) may be omitted.

On the other hand, the control part 20 may perform not only upward revision of a search cost for an inaccessible road section, but also upward revision of a search cost for a road section with no vehicles passing through upon setting the display color of the road section with no vehicles passing through to a caution color at step S137. In this case, the control part 20 sets the degree of upward revision of the search cost for the inaccessible road section to be greater than the degree of upward revision of the search cost for the road section with no vehicles passing through.

Furthermore, the control part 20 may allow a road section where the number of times that a probe car P has passed therethrough is greater than or equal to a reference number of times (e.g., once) and other road sections among the road sections in the target region to be identifiable. For example, the control part 20 may set the display color of a road section where the number of times that at least one probe car P has passed therethrough is greater than or equal to a reference number of times, to blue, etc. (a different color than any of the normal color, the warning color, and the caution color). By this, it becomes possible to recognize road sections in the target region that are highly likely to be actually accessible to vehicles.

### (4) Third embodiment

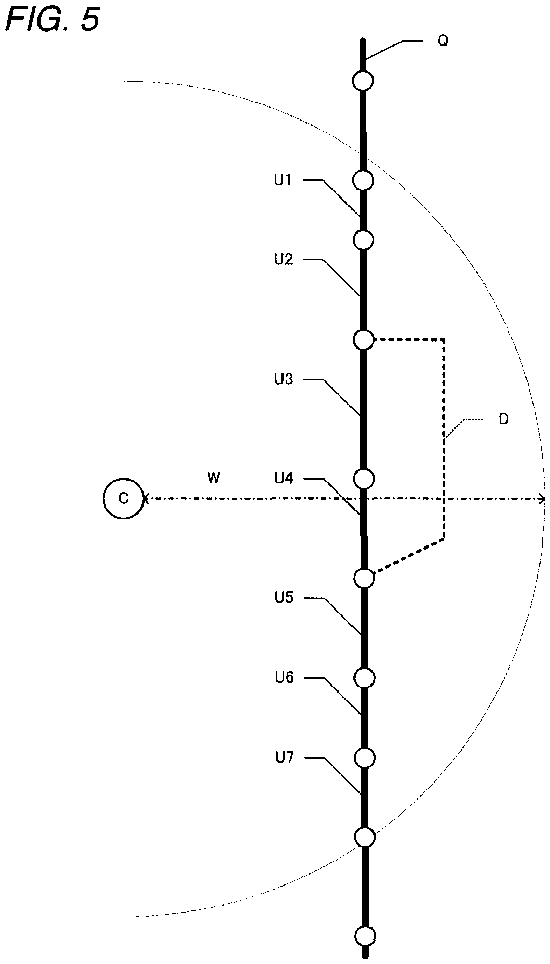

FIG. 5 is a schematic diagram of a road. It is assumed that a road Q indicated by a thick line in FIG. 5 is a national highway given a single route number. By the function of the regional road section extraction module 21b, the control part 20 obtains a point of occurrence C where a disaster which is a factor causing a road section to become inaccessible has occurred, a time of occurrence of the disaster, and the level of the disaster, from disaster information received from the disaster information delivery server 50. Then, the control part 20 sets a larger disaster radius W for a greater level of the disaster, and obtains a circle with the disaster radius W and with the point of occurrence C being at the center, as a target region. Then, the control part 20 extracts road sections U1 to U7 in the target region, as regional road sections. In the present embodiment, it is assumed that the point of occurrence C is an epicenter and the level of the disaster is its own seismic intensity or magnitude. The road Q corresponds to a route following a road.

By the function of the inaccessible road section estimation module 21c, the control part 20 obtains, from a plurality of probe cars P, information indicating travel routes on which the probe cars P have actually travelled after the time of occurrence of the disaster. The control part 20 extracts detour routes where the probe cars P have detoured around the road sections U1 to U7 serving as regional road sections, among the travel routes obtained from the plurality of probe cars P. Detouring around the road sections U1 to U7 refers to that a probe car P traveling on the road Q temporarily travels on a portion (detour portion D) in the target region other than on the road Q, and travels back on the road Q. Note that an upper limit is set to the length of the detour portion D, and the control part 20 does not extract a travel route where the length of the detour portion D is greater than or equal to the upper limit, as a detour route of the road Q.

The control part 20 obtains a total number of the detour routes and obtains, for each of the road sections U1 to U7 in the target region, the number of detour routes where the probe cars P have passed by the each of the road sections U1 to U7 (the number of passages). Then, the control part 20 divides each of the numbers of passages for the respective road sections U1 to U7 by the total number of the detour routes, and thereby obtains a passage evaluation value. Then, the control part 20 estimates any of the road sections U1 to U7 whose passage evaluation value is less than or equal to a threshold (e.g., 5%), as an inaccessible road section. Note, however, that when the number of routes where the probe cars P have traveled on all road sections U1 to U7 in the target region is greater than or equal to a predetermined determination value, the control part 20 estimates that there is no inaccessible road section in the target region. Note that when the control part 20 obtains passage evaluation values, the control part 20 may ignore detour routes obtained during a certain period or more back from the current time. By this, an inaccessible road section can be estimated based on somewhat new information. In addition, the control part 20 may calculate passage evaluation values by placing more importance on newer travel routes.

As described above, the control part 20 does not necessarily need to estimate an inaccessible road section from among road sections with no vehicles passing through. Furthermore, the control part 20 does not necessarily need to estimate a road section on a guidance route, as an inaccessible road section. In addition, as shown in FIG. 5, by the function of the regional road section extraction module 21b, the control part 20 may obtain a target region based on the point of occurrence of a disaster.

### (5) Other embodiments

Although, in the first embodiment, a road section on a guidance route with a destination at which a route-provided car Pr has arrived is extracted from among road sections with no vehicles passing through which are extracted in advance, the road section does not necessarily need to be extracted in this order. Namely, the control part 20 may extract road sections on a guidance route with a destination at which the route-provided car Pr has arrived from among regional road sections, and extract a road section through which the route-provided car Pr has never passed even once, as a road section with no vehicles passing through, from among the extracted road sections.

Although, in the above-described embodiments, a guidance route search is performed by the inaccessible road section estimation system 10, an in-vehicle device, etc., mounted on a probe car P may search for a guidance route based on the map information 30a delivered from the inaccessible road section estimation system 10. In this case, the inaccessible road section estimation system 10 is configured to be able to collect information indicating the route searched for by the in-vehicle device, etc., mounted on the probe car P.

Here, the road section is a unit of a road obtained by segmenting the road in a length direction and may be, for example, a section obtained by segmenting the road on a per consecutive intersection or predetermined distance basis. The factor causing a road to become inaccessible may be a man-made factor causing a road to become inaccessible or may be a natural factor causing a road to become inaccessible. The target region is an area including a point where a factor causing a road to become inaccessible has occurred, and may be, for example, an administrative district including the point, or an area whose distance from the point is within a predetermined distance. The regional road section extracting part may be configured in any manner as long as the regional road section extracting part can obtain information indicating a target region, and may set a target region based on a point where a factor causing a road to become inaccessible has occurred, or may obtain information indicating a preset target region by communication, etc.

The regional road section extracting part may be configured in any manner as long as the regional road section extracting part can extract regional road sections, at least a part of which is present in the target region, and may extract regional road sections from map information defining in advance each road section on a map. The period from the occurrence of a factor until now is a period from the time of occurrence of the factor until the current time. Note, however, that when, for example, the time of occurrence of a factor is uncertain, the regional road section extracting part may consider the time at which information indicating a target region is obtained, as the time of occurrence of the factor. This is because the information indicating a target region is obtained at a time after the time of occurrence of the factor. The expression "a mobile unit has not passed through even once" may indicate that the number of times that information indicating passage of the mobile unit is obtained is zero. The information indicating passage of the mobile unit may be obtained, for example, from sensing results of a mobile unit sensor installed on a road, or from location information of the mobile unit, or from information transmitted from the mobile unit. The mobile unit may be configured in any manner as long as the mobile unit can move with a user, and may be a vehicle on which the user rides or may be a portable terminal carried by the user.

The road section around which a mobile unit has detoured may be a road section around which a user of the mobile unit appears to have intentionally detoured and through which the mobile unit avoids passing on purpose in a situation where the mobile unit normally passes therethrough. For example, the inaccessible road section estimating part may determine whether a road section has been detoured, based on a past passage history or may determine whether a road section has been detoured, based on routes through which mobile units have passed in the past. For example, when a mobile unit has passed through a route this time that is substantially the same as a past route through which mobile units have passed at a frequency greater than or equal to a threshold in a passage history, a road section through which the mobile units have passed in the past route but the mobile unit has not passed in the route this time may be determined, by the inaccessible road section estimating part, to have been detoured. The substantially the same route may be a route in which the matching rate of road sections through which the mobile unit has passed is greater than or equal to a threshold, or may be a route with a matching point of departure and destination.

In addition, when, in a case in which a mobile unit has passed through a first road section and thereafter passed through the first road section, the mobile unit has not passed through a third road section through which the mobile unit is supposed to pass normally between the first road section and a second road section, the inaccessible road section estimating part may determine that the third road section has been detoured. For example, when the first to third road sections are road sections following a continuous road, the inaccessible road section estimating part may determine that the third road section has been detoured. The term "following a road" may indicate that a route name or a route type matches, or may indicate that the widths of the road have a similarity greater than or equal to a reference value, or may indicate that a change in traveling direction at an intersection is less than or equal to a threshold.

Furthermore, the road section around which a mobile unit has detoured may be a road section to which a user is guided as a road section on a route that guides the mobile unit to a destination, but the mobile unit has arrived at the destination without passing through the road section. Here, a road section through which the mobile unit has not actually passed despite the fact that the user is guided thereto once can be estimated to be a road section around which the user has intentionally detoured, and can be estimated to be a road section around which the user has detoured as a result of him/her determining that the road section is inaccessible.

Furthermore, the inaccessible road section estimating part may extract road sections with no vehicles passing through which are road sections, among regional road sections, where even a single piece of probe information indicating that a corresponding one of the regional road sections is passed through has not been collected during a period from the occurrence of a factor until now, and extract an inaccessible road section around which the mobile unit has detoured during the period from the occurrence of the factor until now, among the road sections with no vehicles passing through. By thus narrowing down first a road section corresponding to an inaccessible road section, a process of extracting an inaccessible road section can be efficiently implemented. Particularly, by extracting road sections with no vehicles passing through where even a single piece of probe information has not been collected, before extracting a road section around which the mobile unit has detoured, the number of road sections serving as processing targets for determining whether the mobile unit has detoured can be significantly narrowed down, enabling to efficiently perform the process.

Furthermore, when the inaccessible road section estimating part displays road sections on a map, the inaccessible road section estimating part may allow road sections with no vehicles passing through and an inaccessible road section to be identifiable. By this, road sections can be displayed such that the likelihood of being inaccessible is identifiable.

In addition, when the inaccessible road section estimating part displays road sections on a map, the inaccessible road section estimating part may allow a road section where the number of times that a mobile unit has passed therethrough during a period from the occurrence of a factor until now is greater than or equal to a reference number of times and other road sections among regional road sections to be identifiable. By this, road sections can be displayed such that road sections that are highly likely to be actually accessible is identifiable.

In addition, the factor causing a road section to become inaccessible may be a disaster. By this, a road section that has become inaccessible due to a disaster can be estimated. Furthermore, the regional road section extracting part may obtain a target region based on a point where a factor has occurred. For example, the regional road section extracting part may obtain a target region with a larger range for a greater degree of intensity of a factor. The intensity of a factor may be the seismic intensity or magnitude of an earthquake or may be the wind speed of a typhoon, the size of a storm, etc. Furthermore, the regional road section extracting part may obtain a target region with a shape according to the properties of a factor. For example, when a factor is related to water damage such as a tsunami, a high tide, or a flood, a target region may be obtained based on the shape of a coastline, a river, or a contour line (less than or equal to a sea-level threshold).

Furthermore, a technique for estimating an inaccessible road section based on whether a road section has been detoured as in the present invention can also be applied as a program or a method. In addition, a system, a program, and a method such as those described above may be implemented as a single apparatus or may be implemented using components shared with parts included in a vehicle, and various types of modes are included. For example, it is possible to provide a navigation system and an inaccessible road section estimation system, method, and program that include an apparatus such as that described above. In addition, changes may be made as appropriate, e.g., a part is software and a part is hardware. Furthermore, the invention is also implemented as a recording medium for a program that controls the apparatus. Needless to say, the recording medium for software may be a magnetic recording medium or may be a magneto-optical recording medium, and any recording medium to be developed in the future can also be considered in the exact same manner.

### REFERENCE SIGNS LIST

10: Inaccessible road section estimation system, 20: Control part, 21: Inaccessible road section estimation program, 21a: Route guidance module, 21b: Regional road section extraction module, 21c: Inaccessible road section estimation module, 30: Recording medium, 30a: Map information, 30b: Probe DB, 30c: Guidance route DB, 40: Communication part, 50: Disaster information delivery server, G: Destination, P: Probe car, Pr: Route-provided car, R: Guidance route, R0: Guidance route, R1 and R2: Revised guidance route, S0 to S2: Point of departure, and Z1 and Z2: Road section with no vehicles passing through

## Claims

1. An inaccessible road section estimation system comprising:
a regional road section extracting part that extracts regional road sections, each of the regional road sections being a road section in a target region, the target region being an area where a factor causing a road section to become inaccessible has occurred; and
an inaccessible road section estimating part that estimates, as an inaccessible road section, a road section around which a mobile unit has detoured after occurrence of the factor, among the regional road sections.

2. The inaccessible road section estimation system according to claim 1, wherein the inaccessible road section estimating part estimates, as an inaccessible road section, a road section through which the mobile unit has not passed even once and around which the mobile unit has detoured during a period from the occurrence of the factor until now, among the regional road sections.

3. The inaccessible road section estimation system according to claim 1 or 2, wherein the road section around which the mobile unit has detoured is a road section to which a user is guided as a road section on a route that guides the mobile unit to a destination, but the mobile unit has arrived at the destination without passing through the road section.

4. The inaccessible road section estimation system according to claim 3, wherein the inaccessible road section estimating part:
extracts road sections with no vehicles passing through, each of the road sections with no vehicles passing through being a road section where even a single piece of probe information has not been collected during the period from the occurrence of the factor until now among the regional road sections, the probe information indicating that a corresponding one of the regional road sections is passed through; and
extracts an inaccessible road section around which the mobile unit has detoured during the period from the occurrence of the factor until now, among the road sections with no vehicles passing through.

5. The inaccessible road section estimation system according to claim 4, wherein when the inaccessible road section estimating part displays the road sections on a map, the inaccessible road section estimating part allows the road sections with no vehicles passing through and the inaccessible road section to be identifiable.

6. The inaccessible road section estimation system according to claim 4, wherein when the inaccessible road section estimating part displays the road sections on a map, the inaccessible road section estimating part allows a road section where a number of times that the mobile unit has passed through the road section during the period from the occurrence of the factor until now is greater than or equal to a reference number of times and other road sections among the regional road sections to be identifiable.

7. The inaccessible road section estimation system according to any one of claims 1 to 6, wherein the factor causing a road section to become inaccessible is a disaster.

8. The inaccessible road section estimation system according to any one of claims 1 to 7, wherein the regional road section extracting part obtains the target region based on a point where the factor has occurred.

9. An inaccessible road section estimation program causing a computer to function as:
a first road section extracting part that extracts regional road sections, each of the regional road sections being a road section in a target region, the target region being an area where a factor causing a road section to become inaccessible has occurred; and
an inaccessible road section estimating part that estimates, as an inaccessible road section, a road section around which a mobile unit has detoured after occurrence of the factor, among the regional road sections.
